# EUROPÄISCHE PATENTANMELDUNG

(11) **EP 4 530 089 A1**
(43) Veröffentlichungstag der Anmeldung: **02.04.2025**
(21) Anmeldenummer: 24202793.6
(22) Anmeldetag: 26.09.2024
(51) Int. Cl.: B42D 25/36, B42D 25/45

(54) **KARTENKÖRPER MIT SAUGFÄHIGEM KERN UND VERFAHREN ZUM HERSTELLEN EINES KARTENKÖRPERS MIT SAUGFÄHIGEM KERN**

(30) Priorität: 27.09.2023 DE 102023126383
(71) Anmelder: Giesecke+Devrient ePayments GmbH, 81677 München (DE)
(72) Erfinder: Fabian, Cristina, 81677 München (DE); Kohl, Klaus, 81677 München (DE)
(74) Vertreter: LKGLOBAL Lorenz & Kopf Patentanwalt Attorney at Law PartG mbB

(57) **Zusammenfassung**

Kartenkörper (10) mit einem Schichtverbund (40), welcher eine erste Deckschicht (11), eine zweite Deckschicht (12) und eine Kernschicht (13) aufweist. Die Kernschicht (13) ist zwischen der ersten Deckschicht (11) und der zweiten Deckschicht (12) angeordnet. Die Kernschicht (13) weist zumindest einen Kernschichtabschnitt (14) auf, welcher zur Aufnahme eines Mediums (15) aus einer Umgebung (30) des Kartenkörpers (10) ausgebildet ist, um somit das Medium (15) in den zumindest einen Kernschichtabschnitt (14) einzulagern und einen Farbeffekt am Kernschichtabschnitt (14) bereitzustellen. Der Kernschichtabschnitt kann eine poröse Materialstruktur aufweisen, die Kapillarwirkung zeigen kann. Der Kernschichtabschnitt kann in einem Randbereich angeordnet sein.

## Beschreibung

### Gebiet der Erfindung

Die vorliegende Erfindung betrifft Kartenkörper mit saugfähigem Kern. Insbesondere betrifft die Erfindung einen Kartenkörper, die Verwendung eines solchen Kartenkörpers als Teilkomponente eines kartenförmigen Datenträgers, sowie ein Verfahren zum Herstellen eines Kartenkörpers für einen kartenförmigen Datenträger.

### Hintergrund der Erfindung

Kartenförmige Datenträger werden heutzutage in einer Vielzahl von Anwendungsgebieten verwendet. Beispielsweise können solche Datenträger zum bargeldlosen Bezahlen von Waren oder Dienstleistungen, zur personenbezogenen Identitätsfeststellung oder für einen Zugang zu internetbasierten Anwendungsprogrammen eingesetzt werden. Dementsprechend gibt es zum Beispiel kartenförmige Datenträger in Form von Chipkarten im Allgemeinen, Zahlungskarten, wie beispielsweise Kreditkarten oder Debitkarten, sowie Personalausweis- oder Identitätskarten. Diese kartenförmigen Datenträger enthalten üblicherweise Kunststoff bzw. Plastik als Basismaterial. Zuweilen werden aber auch kartenförmige Datenträger mit Metall, Holz, Glas und Keramik bereitgestellt. Zur Verbesserung der Ästhetik oder zur Personalisierung können kartenförmige Datenträger mit verschiedenen, nach außen sichtbaren Farben versehen werden, um einen Farbeffekt bzw. einen Farbeindruck für einen Betrachter des kartenförmigen Datenträgers bereitzustellen. Die Farben können dabei in Form von Druckschichten im kartenförmigen Datenträger oder aber als Bedruckungen auf einer Oberfläche des kartenförmigen Datenträgers vorgesehen sein.

### Beschreibung

Es ist eine Aufgabe der vorliegenden Erfindung, die Aufnahmefähigkeit eines Kartenkörpers zur Aufnahme eines Mediums zu verbessern.

Diese Aufgabe wird durch den Gegenstand der unabhängigen Ansprüche gelöst. Beispielhafte Ausführungsformen ergeben sich aus den abhängigen Ansprüchen und der nachfolgenden Beschreibung.

Gemäß einem Aspekt ist ein Kartenkörper vorgesehen. Der Kartenkörper umfasst einen Schichtverbund, welcher eine erste Deckschicht, eine zweite Deckschicht und eine Kernschicht aufweist. Die Kernschicht ist zwischen der ersten Deckschicht und der zweiten Deckschicht angeordnet. Die Kernschicht weist zumindest einen Kernschichtabschnitt auf, welcher zur Aufnahme eines Mediums aus einer Umgebung des Kartenkörpers ausgebildet ist, um somit das Medium in den zumindest einen Kernschichtabschnitt einzulagern.

Durch das in den Kernschichtabschnitt eingelagerte Medium ist es möglich, dem Kartenkörper bestimmte Eigenschaften, wie zum Beispiel Farbeigenschaften oder Geruchseigenschaften, zu verleihen. Es ist auch möglich, dem Kartenkörper haptische Eigenschaften zu verleihen, zum Beispiel eine raue Struktur an den Kanten des Kartenkörpers. Beispielsweise kann durch eine Aufnahme des Mediums in den Kernschichtabschnitt eine Struktur im Randbereich des Kernschichtabschnitts und damit im Randbereich des Kartenkörpers derart verändert werden, dass sich dort ein haptisch wahrnehmbares Relief ausbildet.

Vorzugsweise kann ein Farbeffekt am Kernschichtabschnitt bereitgestellt werden, der von einem Betrachter des Kartenkörpers wahrnehmbar ist. Beim Aufnehmen bzw. Aufsaugen des Mediums in den Kernschichtabschnitt kann das Medium insbesondere in tiefere Bereiche des Kartenkörpers eindringen, sodass mögliche Abnutzungen im Oberflächenbereich oder im Randbereich des Kartenkörpers nicht zwangsweise dazu führen, dass die dem Kartenkörper aufgeprägte Eigenschaft, die durch das eingelagerte Medium hervorgerufen wird, verloren geht.

Der Kartenkörper kann also einen Schichtverbund aufweisen, bei welchem der Kernschichtabschnitt zwischen den beiden Deckschichten angeordnet ist. Der Kernschichtabschnitt und die beiden Deckschichten können in einem Laminatverbund vorliegen, der hierin einfach auch als Schichtverbund bezeichnet wird. Neben den beiden Deckschichten und dem Kernschichtabschnitt kann der Kartenkörper weitere Schichten aufweisen.

Der Kartenkörper kann weiterhin eine elektronische Kontaktschnittstelle aufweisen, welche im Bereich einer Kartenoberfläche vorgesehen ist. Alternativ oder zusätzlich kann der Kartenkörper auch eine Kontaktlosschnittstelle, beispielsweise mit einem Antennenelement oder einer Spule, aufweisen. Die elektronische Kontaktschnittstelle und/oder die Kontaktlosschnittstelle können für eine Kommunikation mit einem externen Lesegerät, beispielsweise einem Kartenlesegerät, ausgeführt sein. Die Kontaktlosschnittstelle kann in einer der beiden Deckschichten angeordnet sein oder auch im Kernschichtabschnitt. Neben den kontaktlosen und kontaktbehafteten Karten bzw. Kartenkörpern können auch Biometriekarten, das heißt mit Fingersensor ausgestattete Kartenkörper, verwendet werden.

Es ist möglich, dass der Kernschichtabschnitt einen Zentralbereich umgibt, der ebenfalls zwischen den beiden Deckschichten angeordnet ist. In einem solchen Fall können die Komponenten der Kontaktlosschnittstelle auch im Zentralbereich angeordnet sein oder sich dort hinein erstrecken. In dem Kartenkörper können auch Sicherheitsmerkmale vorgesehen sein. Solche Sicherheitsmerkmale können ebenfalls im Bereich einer Kartenoberfläche vorgesehen sein.

Da sich der Kernschichtabschnitt zwischen den beiden Deckschichten befindet, kann der Kernschichtabschnitt über einen Randabschnitt des Kartenkörpers von außen zugänglich sein. Insbesondere kann der Kartenkörper einen umlaufenden Rand aufweisen, der so ausgestaltet ist, dass der Kernschichtabschnitt über den gesamten umlaufenden Rand von außen zugänglich, oder aber nur über einen oder mehrere Randabschnitte des umlaufenden Randes zugänglich ist. In letzterem Fall kann die dem Kartenkörper aufgeprägte Eigenschaft, die durch das eingelagerte Medium hervorgerufen wird, lediglich an bestimmten Stellen im Randbereich bereitgestellt werden. Ist das Medium beispielsweise eine Farbe oder ein Farbmaterial, so kann durch das abschnittsweise Bereitstellen des Kernschichtabschnitts im Randbereich des Kartenkörpers ein Farbmuster erzeugt werden.

Es ist möglich, verschiedene Arten von Medien oder verschiedene Ausprägungen eines Mediums in den Kernschichtabschnitt einzulagern. Im Falle des Einlagerns eines Farbmaterials können beispielsweise verschiedene Farben in den Kernschichtabschnitt eingelagert werden, sodass ein Betrachter verschiede Farben von außen wahrnimmt.

Der Kernschichtabschnitt weist insbesondere ein aufnahmefähiges Material oder eine aufnahmefähige Beschaffenheit auf, sodass das jeweilige Medium dauerhaft in dem Kernschichtabschnitt eingelagert werden kann. Das Material umfasst vorzugsweise ein saugfähiges Material, welches bei der Herstellung des Kartenkörpers das Medium aus einer Umgebung aufsaugen kann.

Bei der Herstellung des Kartenkörpers kann das Medium beispielsweise in einen Aggregatszustand gebracht werden, der es erlaubt, dass das Medium vom Kernschichtabschnitt aufgesaugt werden kann. Dabei wird das Medium zum Beispiel in kleine, beispielsweise porenartige, Ausnehmungen des Kernschichtabschnitts eingelagert. Der Kernschichtabschnitt kann dabei wie ein Schwamm wirken, der das Medium aufnimmt und dabei das Medium in sich verteilt. Nach der Aufnahme des Mediums in den Kernschichtabschnitt kann das Medium ausgehärtet werden und damit einen festen Bestandteil des hergestellten Kartenkörpers bilden.

Der Kernschichtabschnitt kann unter Verwendung eines Schaumstoffes, beispielsweise eines Latexschaumstoffes, eines Polyurethan-Schaumstoffes, eines Polyethylen-Schaumstoffes, eines Silikonschaumstoffes, eines Gummischaumstoffes oder eines Verbundwerkstoff-Schaumstoffes gebildet werden. Der Kernschichtabschnitt kann zum Beispiel Materialien wie Holz, Bambus, Korallen, Cellulose, Textilien, Leinen oder Tintenlöschpapiere aufweisen. Tintenlöschpapiere sind beispielsweise ungeleimte und wenig verpresste Papiere, die Kapillaren bilden, in welche das Medium eingelagert werden kann. Auch solche Materialien können die Saugfähigkeit des Kernschichtabschnitts zur Aufnahme des Mediums gewährleisten.

Diese saugfähigen Materialien können sich vorteilhafterweise auch mit den Deckschichten, beispielsweise aus Kunststoff gefertigten Deckschichten, verbinden. Diese Verbindung kann durch zusätzlichen Kleber zwischen der jeweiligen Deckschicht und dem Kernschichtabschnitt unterstützt werden.

Es sei verstanden, dass der Kartenkörper mehrere Kernschichten aufweisen kann, die jeweils einen Kernschichtabschnitt enthalten. Insbesondere kann eine erste Kernschicht mit dem hierin beschriebenen Kernschichtabschnitt sowie eine zweite Kernschicht mit dem hierin beschriebenen Kernschichtabschnitt innerhalb eines Kartenkörpers vorgesehen sein. Dabei kann eine Schichtenabfolge des Kartenkörpers bereitgestellt werden, die vorsieht, dass die erste Deckschicht an die erste Kernschicht angrenzt, eine Zwischenschicht wiederum an die erste Kernschicht angrenzt, die zweite Kernschicht wiederum an die Zwischenschicht angrenzt, und die zweite Deckschicht an die zweite Kernschicht angrenzt. Die beiden Deckschichten können dabei jeweils auch mit einem sog. Overlay versehen werden oder selbst ein solches Overlay bilden.

Gemäß einer Ausführungsform ist der zumindest eine Kernschichtabschnitt zur Aufnahme eines gasförmigen und/oder flüssigen Mediums ausgeführt.

Der Kernschichtabschnitt kann insbesondere während eines Herstellungsprozesses zur Aufnahme eines gasförmigen und/oder flüssigen Mediums ausgeführt sein, wobei der Kernschichtabschnitt nach seiner Herstellung nicht mehr oder nur noch begrenzt aufnahmefähig für das gasförmige und/oder flüssige Medium ist. Beispielsweise kann der Kartenkörper bei seiner Herstellung in ein flüssiges Farbmaterial eingetaucht werden, sodass der Kernschichtabschnitt dieses flüssige Farbmaterial während des Herstellungsprozesses aufsaugt. Nach dem Herstellungsprozess kann das Farbmaterial in einem ausgehärteten Zustand vorliegen. In diesem Zustand umfasst der Kartenkörper das eingelagerte Farbmaterial.

Das Farbmaterial kann auch in einem Druckverfahren oder Sprühverfahren auf einen freiliegenden Bereich des Kernschichtabschnitts aufgebracht werden, sodass das Farbmaterial anschließend allmählich in den Kernschichtabschnitt einzieht bzw. von diesem aufgesogen wird, um es somit in den Kernschichtabschnitt einzulagern.

Auf ähnliche Weise kann auch ein gasförmiges Medium in den Kernschichtabschnitt eingelagert werden, wobei das gasförmige Medium nach der Aufnahme in den Kernschichtabschnitt Ablagerungen im Kernschichtabschnitt bilden kann, die dem Kernschichtabschnitt eine bestimmte Eigenschaft aufprägen. Beispielsweise könnte so eine bestimmte Geruchseigenschaft bzw. ein Duft in den Kartenkörper eigebracht werden.

Gemäß einer Ausführungsform weist der zumindest eine Kernschichtabschnitt eine Vielzahl von Hohlräumen auf, die verteilt innerhalb eines Kernschichtmaterials des zumindest einen Kernschichtabschnitts angeordnet sind.

Die Hohlräume können fein verteilt innerhalb des gesamten Kernschichtabschnitts angeordnet sein. Die Hohlräume können auch durch Kanäle gebildet sein, die sich durch den Kernschichtabschnitt erstrecken. Ebenso können die Hohlräume auch durch Kanäle gebildet sein, die verschiedene größere Hohlräume oder Kammern miteinander verbinden. Der Kernschichtabschnitt ist aber insbesondere so ausgebildet, dass das Medium zumindest während des Herstellungsprozesses des Kartenkörpers in den Kernschichtabschnitt eintreten kann bzw. von diesem aufgesaugt werden kann. Die innere Anordnung der Hohlräume kann dann eine Verteilung des Mediums im Kernschichtabschnitt begünstigen. Es sei verstanden, dass das Aufnehmen des Mediums im Kernschichtabschnitt nicht dazu führen mag, dass der Kernschichtabschnitts aufquillt. Der Kernschichtabschnitt kann insbesondere beim Aufnehmen des Mediums seine Dimensionen oder Abmessungen beibehalten.

Der Kernschichtabschnitt kann vollständig und/oder gleichmäßig mit den Hohlräumen durchsetzt sein. Die Größe der Hohlräume kann entlang einer Erstreckungsrichtung des Kernschichtabschnitts variieren. Beispielsweise können die Hohlräume in einem Randbereich des Kernschichtabschnitts, welcher an einem Rand des Kartenkörpers angeordnet ist, größer sein als in einem im Kartenkörper weiter innenliegenden Bereich des Kernschichtabschnitts oder umgekehrt. Auf diese Weise kann die Aufnahmefähigkeit bzw. Saugfähigkeit des Kernschichtabschnitts bereichsweise variiert werden.

Gemäß einer Ausführungsform ist das Medium dazu ausgeführt, in die Vielzahl von Hohlräumen einzudringen, um somit die Vielzahl von Hohlräumen zumindest teilweise zu befüllen.

Das bedeutet, dass das Medium die Hohlräume entweder teilweise oder vollständig ausfüllen kann. Im Falle eines vollständigen Befüllens der Hohlräume kann die Aufnahmefähigkeit des Kernschichtabschnitt für das Medium oder ein anderes Medium begrenzt werden. Insbesondere ist bei vollständigem Befüllen des Kernschichtabschnitts mit dem Medium eine Sättigung des Kernschichtabschnitts erreicht, sodass kein weiteres Medium mehr in den Kernschichtabschnitt aufgenommen werden kann. Somit kann verhindert werden, dass der Kernschichtabschnitt bei der Herstellung des Kartenkörpers ungewollt ein Medium, zum Beispiel ein Farbmaterial, aufnimmt.

Gemäß einer Ausführungsform weist der zumindest eine Kernschichtabschnitt eine poröse Materialstruktur auf.

Mit anderen Worten kann der Kernschichtabschnitt porig, löchrig, durchlöchert oder mit Kanälen und Hohlräumen durchzogen sein. Er kann insbesondere schwammartig ausgebildet sein und somit durchlässig für das Medium ausgebildet sein. Dadurch kann das Medium während der Herstellung des Kartenkörpers in den Kernschichtabschnitt eindringen, um somit in den Kernschichtabschnitt eingelagert zu werden. Nach dem Eindringen kann das Medium im Kernschichtabschnitt verfestigt werden, sodass es nach der Herstellung des Kartenkörpers im Kernschichtabschnitt verbleibt.

Gemäß einer Ausführungsform weist der zumindest eine Kernschichtabschnitt eine Materialstruktur auf, die dazu ausgeführt ist, das Medium durch Kapillarwirkung aufzunehmen.

Es können somit insbesondere Adhäsionskräfte zwischen Molekülen verschiedener Stoffe wirken. Dadurch kann das Medium, wenn es in eine nahe Umgebung des Kernschichtabschnitts gebracht wird, von dem Kernschichtabschnitt angezogen werden und somit quasi in die poröse Struktur des Kernschichtabschnitts eingezogen bzw. eingesaugt werden. Wird beim Herstellungsprozess des Kartenkörpers der Kernschichtabschnitt beispielsweise einem Farbmaterial ausgesetzt, so zieht dieses Farbmaterial selbsttätig in den Kernschichtabschnitt ein, sodass der Kernschichtabschnitt teilweise oder vollständig mit dem Farbmaterial durchsetzt wird. Während des Durchsetzens oder nach dem Durchsetzen des Kernschichtabschnitts mit dem Farbmaterial kann das Farbmaterial allmählich aushärten. Auf diese Weise kann der Kernschichtabschnitt gefärbt werden und somit einen Farbeffekt für den schließlich hergestellten Kartenkörper und für einen mittels des Kartenkörpers hergestellten kartenförmigen Datenträger bereitstellen.

Gemäß einer Ausführungsform ist das Medium ein Farbmaterial.

Das Farbmaterial kann eine Druckfarbe oder eine Tinte sein. Das Farbmaterial kann mittels Tintenstrahldruck, Tampondruck oder Siebdruck auf den Kernschichtabschnitt aufgedruckt werden, wobei das Farbmaterial in den Kernschichtabschnitt eingezogen wird. Anschließend kann das in den Kernabschnitt eingebrachte Farbmaterial mittels Ultraviolettstrahlung gehärtet werden.

Ebenso kann das Farbmaterial durch Eintauchen in ein Lackbad in den Kernschichtabschnitt eingebracht werden, wobei eine anschließende Trocknung wiederum durch Ultraviolettstrahlung oder durch Heißluft erfolgen kann.

Es sei verstanden das auch andere Arten von Farbauftrag verwendet werden können, um das Farbmaterial in den Kernschichtabschnitt einzubringen. Das in den Kernschichtabschnitt eingebrachte Farbmaterial kann die poröse Struktur des Kernschichtabschnitts zumindest teilweise oder aber vollständig verschließen, sodass der Kernschichtabschnitt stabiler gegenüber mechanischen Einflüssen ist.

Gemäß einer Ausführungsform ist das Medium eine ultraviolettstrahlungshärtende Farbe.

Mit anderen Worten kann eine Trocknung oder Verfestigung der ultraviolettstrahlungshärtenden Farbe unter Verwendung eines Ultraviolettlichts erfolgen, nachdem die Farbe in den Kernschichtabschnitt eingezogen wurde. Dadurch wird die Farbe fest mit dem Kernschichtabschnitt verbunden und kann insbesondere nicht mehr aus dem Kernschichtabschnitt entweichen.

Gemäß einer Ausführungsform ist die Kernschicht vollständig durch den Kernschichtabschnitt gebildet.

Dies kann bedeuten, dass eine komplette Schicht des Schichtverbundes des Kartenkörpers durch den Kernschichtabschnitt gebildet wird. Insbesondere kann der Kernschichtabschnitt eine vollständige, zwischen den beiden Deckschichten angeordnete Zwischenschicht bilden. Auf diese Weise kann der Kernschichtabschnitt einfach als eine Materiallage für den Schichtverbund hergestellt werden, der anschließend zum Beispiel durch Laminieren mit den anderen Schichten des Schichtverbundes verklebt wird.

Gemäß einer Ausführungsform ist der zumindest eine Kernschichtabschnitt in einem Randbereich der Kernschicht angeordnet, welcher einen Zentralbereich der Kernschicht umgibt, wobei sich eine Materialbeschaffenheit des Zentralbereichs von einer Materialbeschaffenheit des Kernschichtabschnitts unterscheidet.

Dies kann bedeuten, dass der Kernschichtabschnitt keine komplette Schicht des Schichtverbundes des Kartenkörpers bildet, sondern vielmehr nur einen Teil einer zwischen den beiden Deckschichten liegenden Schicht bildet. Damit kann der Kernschichtabschnitt nur in einem unmittelbaren Randbereich der Kernschicht angeordnet sein, sodass das Farbmaterial zwar noch über den Rand des Kartenkörpers in den Kernschichtabschnitt gelangen kann, jedoch die Eindringtiefe des Farbmaterials begrenzt ist. Der Farbeffekt ist damit immer noch bereitgestellt werden und der Zentralbereich kann andere Funktionen erfüllen. Denn durch die Wahl eines steiferen Materials für den Zentralbereich als für den Kernschichtabschnitt kann beispielsweise eine Steifigkeit des gesamten Kartenkörpers erhöht werden.

Ebenso können andere Komponenten, wie Spulen, Antennenelemente oder Chipelemente vollständig oder teilweise in dem Zentralbereich der Kernschicht angeordnet sein. Somit können die elektronischen Komponenten von dem saugfähigen Kernschichtabschnitt separiert bzw. getrennt gehalten werden.

Gemäß einer Ausführungsform weist der zumindest eine Kernschichtabschnitt einen Schnittstellenbereich zu einer Umgebung des Kartenkörpers auf, wobei der Schnittstellenbereich des zumindest einen Kernschichtabschnitts an einem Rand des Kartenkörpers angeordnet ist und wobei der zumindest eine Kernschichtabschnitt dazu ausgeführt ist, das Medium aus der Umgebung des Kartenkörpers über den Schnittstellenbereich aufzunehmen, um somit das Medium in den zumindest einen Kernschichtabschnitt einzulagern.

Der Schnittstellenbereich kann durch eine nach außen freiliegende Oberfläche des Kernschichtabschnitts gebildet sein. Diese nach außen freiliegende Oberfläche dient insbesondere der Aufnahme des Mediums bzw. der Farbe aus der Umgebung. Nach Herstellung des Kartenkörpers kann die nach außen freiliegende Oberfläche weiterhin freibleiben, sodass der Farbeffekt nach außen hin sichtbar bleibt. Es kann nach der Herstellung, das heißt nach dem Durchsetzen des Kernschichtabschnitts mit dem Medium, ggf. eine transparente Schutzschicht auf den Schnittstellenbereich aufgetragen werden.

Beispielsweise kann der Schnittstellenbereich an einem Randabschnitt des Kartenkörpers oder an einem gesamten umlaufenden Rand des Kartenkörpers angeordnet sein. Der Rand kann dabei durch Deckschichtränder der beiden Deckschichten, durch einen dazwischenliegenden Kernschichtabschnittsrand des Kernschichtabschnitts und ggf. durch weitere Schichtränder gebildet sein.

Durch die nach außen freiliegende Oberfläche des Kernschichtabschnitts kann das Medium in den Kernschichtabschnitt eingezogen bzw. eingesaugt werden, auch wenn bereits die beiden Deckschichten beidseitig auf der Kernschicht aufgebracht sind. In diesem Fall gelangt das Medium aus der Umgebung kommend über die freiliegende Oberfläche des Kernschichtabschnitts im Randbereich des bereits vorgeformten Kartenkörpers.

Gemäß einer Ausführungsform umfasst der zumindest eine Kernschichtabschnitt ein Latex-Material, ein Polyurethan-Material, ein Polyethylen-Material, ein Silikon-Material, ein Gummi-Material und/oder ein Verbundwerkstoff-Material.

Der Kernschichtabschnitt kann aus einem Schaumstoff, beispielsweise einem Latexschaumstoff, einem Polyurethan-Schaumstoff, einem Polyethylen-Schaumstoff, einem Silikon-Schaumstoff, einem Gummi-Schaumstoff oder einem Verbundwerkstoff-Schaumstoff gebildet werden.

Gemäß einem Aspekt ist eine Verwendung des hierin beschriebenen Kartenkörpers als Teilkomponente eines kartenförmigen Datenträgers angegeben. Beispielsweise kann der Kartenkörper als Basiskomponente zur Herstellung eines Ausweisdokuments, eines Identitätsdokuments, einer Chipkarte oder einer Bezahlkarte verwendet werden.

Gemäß einem Aspekt ist ein Verfahren zum Herstellen eines Kartenkörpers für einen kartenförmigen Datenträger angegeben. In einem Schritt des Verfahrens wird eine erste Deckschicht und eine zweite Deckschicht bereitgestellt. In einem weiteren Schritt wird eine Kernschicht mit zumindest einem Kernschichtabschnitt bereitgestellt, welcher zur Aufnahme eines Mediums aus einer Umgebung ausgebildet ist. In einem weiteren Schritt werden die erste Deckschicht, die zweite Deckschicht und die Kernschicht laminiert, um somit einen Schichtverbund zu bilden, in welchem die Kernschicht zwischen der ersten Deckschicht und der zweiten Deckschicht angeordnet wird. In einem weiteren Schritt wird ein Medium in den zumindest einen Kernschichtabschnitt vor oder nach dem Bilden des Schichtverbundes eingebracht, sodass das Medium in den zumindest einen Kernschichtabschnitt eingelagert wird. In einem weiteren Schritt kann das in den zumindest einen Kernschichtabschnitt eingebrachte Medium ausgehärtet werden.

Die genannten Verfahrensschritte können in der angegebenen Reihenfolge ausgeführt werden.

Das Einbringen des Mediums in den zumindest einen Kernschichtabschnitt vor dem Bilden des Schichtverbundes hat den Vorteil, dass der Kernschichtabschnitt über mehrere noch freiliegende Flächenabschnitte in den Kernschichtabschnitt eingebracht werden kann. Dagegen verbleibt nach dem Bilden des Schichtverbundes möglicherweise ein kleinerer Flächenabschnitt, zum Beispiel im Randbereich des Schichtverbundes, über welchen das Medium dann in den Kernschichtabschnitt eingebracht werden kann.

### Kurze Beschreibung der Figuren

- Fig. 1: zeigt einen kartenförmigen Datenträger.
- Fig. 2: zeigt einen Querschnitt durch einen Kartenkörper des kartenförmigen Datenträgers aus Fig. 1.
- Fig. 3: zeigt einen Ausschnitt eines Kernschichtabschnitts des Kartenkörpers aus Fig. 2.
- Fig. 4: zeigt einen Querschnitt durch einen alternativen Kartenkörper des kartenförmigen Datenträgers aus Fig. 1.
- Fig. 5: zeigt ein Flussdiagramm für ein Verfahren zum Herstellen eines Kartenkörpers.

### Detaillierte Beschreibung beispielhafter Ausführungsformen

Die Darstellungen in den Figuren sind schematisch und nicht maßstäblich. Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

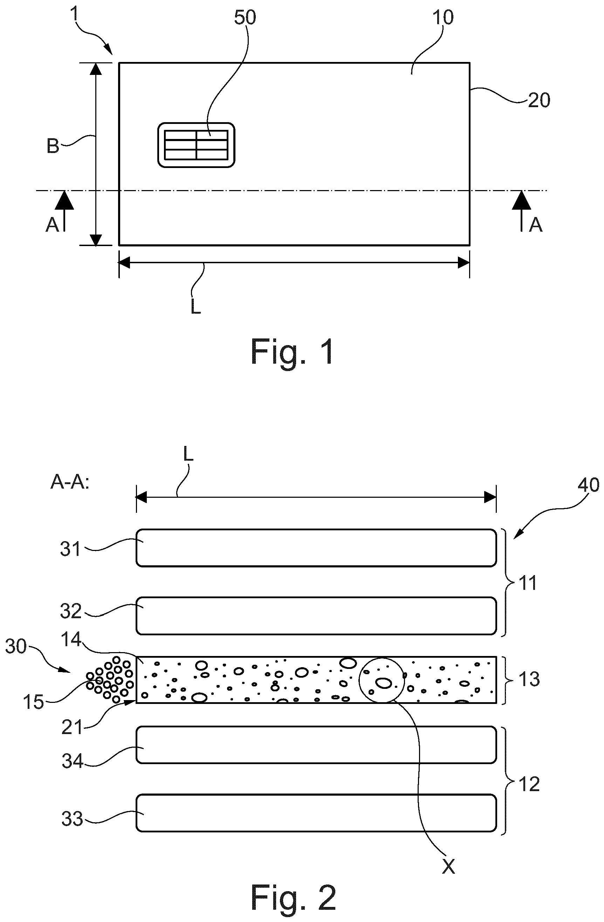

Fig. 1 zeigt einen kartenförmigen Datenträger 1. Der kartenförmige Datenträger 1 kann einen Kartenkörper 10 aufweisen, welcher mehrere Schichten umfasst, die beispielsweise in einem Laminierverfahren zusammengefügt wurden. Der Kartenkörper 10 kann einen umlaufenden Rand 20 aufweisen, der durch vier im Wesentlichen gerade Randabschnitte gebildet wird. Zwei einander gegenüberliegende Randabschnitte erstrecken sich mit der Länge L und zwei weitere, einander gegenüberliegende Randabschnitte erstrecken sich mit der Breite B. Der Kartenkörper 10 kann beispielsweise ein ID-1-Kartenformat aufweisen. Der kartenförmige Datenträger 1 kann ferner ein Chipmodul 50 aufweisen, welches in einem Oberflächenbereich des Kartenkörper 10 integriert ist.

Fig. 2 zeigt nun den Querschnitt A-A durch den Kartenkörper 10 des kartenförmigen Datenträgers 1 aus Fig. 1. Der Kartenkörper 10 umfasst eine erste Deckschicht 11, eine zweite Deckschicht 12 und eine Kernschicht 13, wobei die Schichten gemeinsam einen Schichtverbund 40 bilden. In dem gezeigten Beispiel ist die erste Deckschicht 11 ein Teilschichtverbund mit einer ersten Deckschichtlage 31 und einer ersten Zwischenschicht 32, wobei die erste Zwischenschicht 32 zwischen der ersten Deckschichtlage 31 und der Kernschicht 13 angeordnet ist. Analog dazu ist in dem gezeigten Beispiel die zweite Deckschicht 12 ein Teilschichtverbund mit einer zweiten Deckschichtlage 33 und einer zweiten Zwischenschicht 34, wobei die zweite Zwischenschicht 34 zwischen der zweiten Deckschichtlage 33 und der Kernschicht 13 angeordnet ist. Die beiden Deckschichtlagen 31, 33 können jeweils einen Oberflächenbereich des Kartenkörpers 10 bilden. Es können weitere Schichten in dem Schichtverbund 40 des Kartenkörpers 10 angeordnet sein. Ebenso können die Zwischenschichten 32, 34 auch weggelassen werden.

Die Kernschicht 13 weist einen Kernschichtabschnitt 14 auf oder besteht aus einem solchen Kernschichtabschnitt 14. In dem in Fig. 2 dargestellten Fall bildet der Kernschichtabschnitt 14 vollständig die gesamte Kernschicht 13. Der Kernschichtabschnitt 14 ist zur Aufnahme eines gasförmigen oder flüssigen Mediums 15 aus einer Umgebung 30 des Kartenkörpers 10 ausgebildet, um somit das Medium 15 in den Kernschichtabschnitt 14 einzulagern. Hierfür kann der Kernschichtabschnitt 14 einen Schnittstellenbereich 21 zur Umgebung 30 aufweisen, über welchen das Medium 15 aus der Umgebung 30 aufgenommen werden kann, um somit das Medium 15 in den Kernschichtabschnitt 14 einzulagern. Dabei kann das Medium 15 in einem Druckverfahren oder Sprühverfahren auf einen freiliegenden Bereich des Kernschichtabschnitts 14, der den Schnittstellenbereich 21 bildet, aufgebracht werden, sodass das Medium 15 anschließend allmählich in den Kernschichtabschnitt 14 einzieht bzw. von diesem aufgesogen wird, um es somit in den Kernschichtabschnitt 14 einzulagern. Ebenso kann der Kartenkörper 10 oder lediglich der Kernschichtabschnitt 14 allein in ein Tauchbad eingetaucht werden, sodass das Medium 15 in den Kernschichtabschnitt 14 einziehen kann.

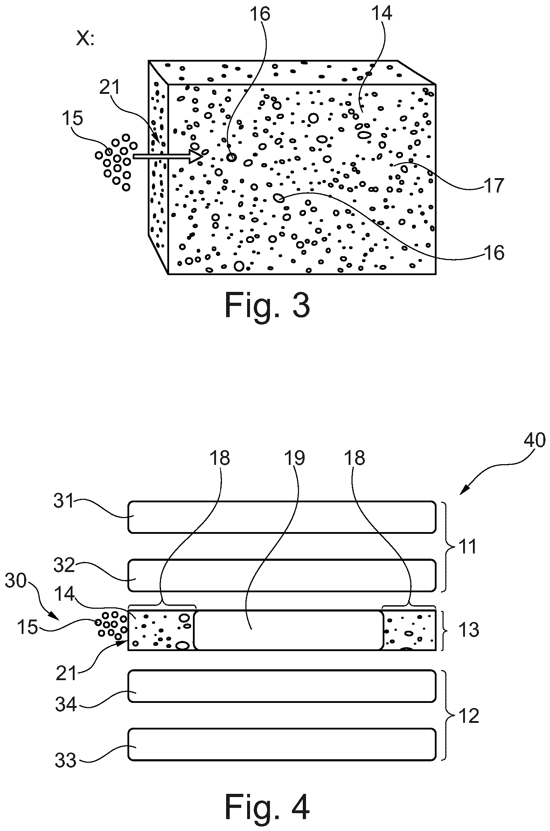

Fig. 3 zeigt den Ausschnitt X des Kernschichtabschnitts 14 des Kartenkörpers 10 aus Fig. 2. In dieser Ansicht wird eine beispielhafte Materialstruktur des Kernschichtabschnitts 14 gezeigt. Der Kernschichtabschnitt 14 umfasst kleine Hohlräume 16, die verteilt innerhalb eines Kernschichtmaterials 17 des Kernschichtabschnitts 14 angeordnet sind, sodass eine poröse Materialstruktur entsteht. Die Hohlräume 16 können verschiede Größen aufweisen. Die Hohlräume 16 innerhalb des Kernschichtabschnitts 14 können durch kanalartige Strukturen miteinander verbunden sein, sodass sich das Medium 15 letztlich durch die kanalartigen Strukturen und in den Hohlräumen 16 verteilen kann. Das Medium 15 gelangt also in die Vielzahl von Hohlräumen 16 und befüllt diese.

Über den Schnittstellenbereich 21 kann das Medium 15 während eines Herstellungsprozesses aus einer Umgebung 30 in den Kernschichtabschnitt 14 aufgesaugt werden. Hierbei können Kapillarkräfte wirken, die das Medium 15 in die Hohlräume 16 des Kernschichtabschnitts 14 hineinzieht.

Dieser Prozess kann vor oder erst nach dem Anbringen der ersten Deckschicht 11 und/oder der zweiten Deckschicht 12 an dem Kernschichtabschnitt 14 vollzogen werden. Beispielsweise kann lediglich der hergestellte Kernschichtabschnitt 14 zunächst dem Medium 15 ausgesetzt werden, sodass das Medium 15 über sämtliche Außenflächen des Kernschichtabschnitts 14 in den Kernschichtabschnitt 14 eingebracht werden kann. Alternativ oder zusätzlich kann der hergestellte Kernschichtabschnitt 14 zunächst mit der ersten Deckschicht 11 und/oder der zweiten Deckschicht 12 verbunden werden und erst anschließend der Schichtverbund 40 dem Medium 15 ausgesetzt werden, sodass das Medium 15 über einen Randbereich, zum Beispiel den in Fig. 2 als Schnittstellenbereich 21 dargestellten Randbereich des Kernschichtabschnitts 14, in den Kernschichtabschnitt 14 eingebracht werden kann.

Fig. 4 zeigt nun einen Querschnitt durch einen alternativen Kartenkörper 10 des kartenförmigen Datenträgers 1 aus Fig. 1. Wie zu erkennen ist, ist der Kernschichtabschnitt 14 lediglich in einem Teilabschnitt 18 bzw. in einem Randbereich 18 der Kernschicht 13 angeordnet, sodass die Kernschicht 13 nun durch den Teilabschnitt 18 und einen Zentralbereich 19 gebildet wird. Dabei kann sich eine Materialbeschaffenheit des Zentralbereichs 19 von einer Materialbeschaffenheit des Kernschichtabschnitts 14 unterscheiden, um somit die Kernschicht 13 hinsichtlich ihrer strukturellen und funktionalen Eigenschaften auf die jeweils gewünschten Anforderungen anzupassen. Zum Beispiel kann der Zentralbereich 19 ein porenfreies Kunststoffmaterial oder metallisches Material aufweisen, sodass der saugfähige Kernschichtabschnitt 14 lediglich im Teilbereich 18 vorliegt, wo das Medium 15 eingelagert wird. In einer Schichtebene der Kernschicht 13 betrachtet kann der Kernschichtabschnitt 14 um den Zentralbereich 19 herum angeordnet sein. Da der Zentralbereich 19 somit durch den Kernschichtabschnitt 14 einerseits und durch die Deckschichten 11, 12 andererseits umgeben ist, ist der Zentralbereich 19 nicht von außerhalb des Kartenkörpers 10 sichtbar oder zugänglich. Lediglich der Kernschichtabschnitt 14 kann mit seinem Schnittstellenbereich 21, also am Rand 20 des Kartenkörpers 10 sichtbar oder zugänglich sein.

Wenn das Medium 15 ein Farbmaterial ist, welches während eines Herstellungsprozesses in den Kernschichtabschnitt 14 eingelagert wurde und anschließend ausgehärtet wurde, kann nach dem Herstellungsprozess ein Kartenkörper 10 bzw. ein kartenförmiger Datenträger 1 bereitgestellt werden, dessen Rand diese Farbe aufweist. Dies gilt sowohl für den in Fig. 2 dargestellten Kartenkörper 10 als auch für den in Fig. 4 dargestellten Kartenkörper 10.

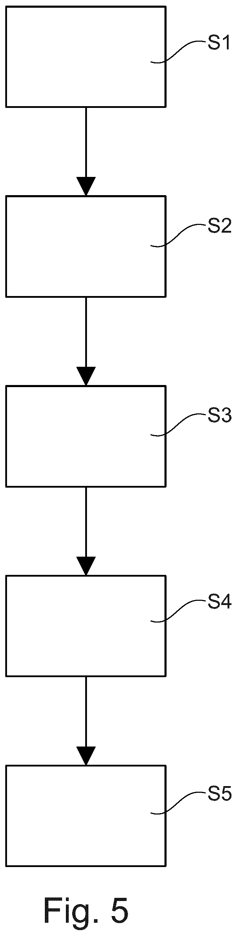

Fig. 5 zeigt ein Flussdiagramm für ein Verfahren zum Herstellen eines Kartenkörpers für einen kartenförmigen Datenträger, beispielsweise ein Verfahren zum Herstellen des Kartenkörpers 10 für den kartenförmigen Datenträger 1 aus Fig. 1. In einem Schritt S1 erfolgt ein Bereitstellen einer ersten Deckschicht 11 und einer zweiten Deckschicht 12. In einem Schritt S2 erfolgt ein Bereitstellen einer Kernschicht 13 mit zumindest einem Kernschichtabschnitt 14, welcher zur Aufnahme eines Mediums 15 aus einer Umgebung 30 ausgebildet ist. In einem Schritt S3 erfolgt ein Laminieren der ersten Deckschicht 11, der zweiten Deckschicht 12 und der Kernschicht 13, um somit einen Schichtverbund 40 zu bilden, in welchem die Kernschicht 13 zwischen der ersten Deckschicht 11 und der zweiten Deckschicht 12 angeordnet wird. In einem Schritt S4 erfolgt ein Einbringen eines Mediums 15, insbesondere einer Farbe, in den zumindest einen Kernschichtabschnitt 14 vor oder nach dem Bilden des Schichtverbundes 40, sodass das Medium 15 in den zumindest einen Kernschichtabschnitt 14 eingelagert wird. In einem Schritt S5 erfolgt ein Aushärten des in den zumindest einen Kernschichtabschnitt 14 eingebrachten Mediums 15.

## Patentansprüche

1. Kartenkörper (10) für einen kartenförmigen Datenträger (1), umfassend:
einen Schichtverbund (40), welcher eine erste Deckschicht (11), eine zweite Deckschicht (12) und eine Kernschicht (13) aufweist;
wobei die Kernschicht (13) zwischen der ersten Deckschicht (11) und der zweiten Deckschicht (12) angeordnet ist;
wobei die Kernschicht (13) zumindest einen Kernschichtabschnitt (14) aufweist, welcher zur Aufnahme eines Mediums (15) aus einer Umgebung (30) des Kartenkörpers (10) ausgebildet ist, um somit das Medium (15) in den zumindest einen Kernschichtabschnitt (14) einzulagern.

2. Kartenkörper (10) nach Anspruch 1,
wobei der zumindest eine Kernschichtabschnitt (14) zur Aufnahme eines gasförmigen und/oder flüssigen Mediums (15) ausgeführt ist.

3. Kartenkörper (10) nach einem der vorhergehenden Ansprüche,
wobei der zumindest eine Kernschichtabschnitt (14) eine Vielzahl von Hohlräumen (16) aufweist, die verteilt innerhalb eines Kernschichtmaterials (17) des zumindest einen Kernschichtabschnitts (14) angeordnet sind.

4. Kartenkörper (10) nach Anspruch 3,
wobei das Medium (15) dazu ausgeführt ist, in die Vielzahl von Hohlräumen (16) einzudringen, um somit die Vielzahl von Hohlräumen (16) zumindest teilweise zu befüllen.

5. Kartenkörper (10) nach einem der vorhergehenden Ansprüche,
wobei der zumindest eine Kernschichtabschnitt (14) eine poröse Materialstruktur aufweist.

6. Kartenkörper (10) nach einem der vorhergehenden Ansprüche,
wobei der zumindest eine Kernschichtabschnitt (14) eine Materialstruktur aufweist, die dazu ausgeführt ist, das Medium (15) durch Kapillarwirkung aufzunehmen.

7. Kartenkörper (10) nach einem der vorhergehenden Ansprüche,
wobei das Medium (15) ein Farbmaterial ist.

8. Kartenkörper (10) nach einem der vorhergehenden Ansprüche,
wobei das Medium (15) eine ultraviolettstrahlungshärtende Farbe ist.

9. Kartenkörper (10) nach einem der vorhergehenden Ansprüche,
wobei die Kernschicht (13) vollständig durch den Kernschichtabschnitt (14) gebildet ist.

10. Kartenkörper (10) nach einem der Ansprüche 1 bis 8,
wobei der zumindest eine Kernschichtabschnitt (14) in einem Randbereich (18) der Kernschicht (13) angeordnet ist, welcher einen Zentralbereich (19) der Kernschicht (13) umgibt, wobei sich eine Materialbeschaffenheit des Zentralbereichs (19) von einer Materialbeschaffenheit des Kernschichtabschnitts (14) unterscheidet.

11. Kartenkörper (10) nach einem der vorhergehenden Ansprüche,
wobei der zumindest eine Kernschichtabschnitt (14) einen Schnittstellenbereich (21) zu einer Umgebung (30) des Kartenkörpers (10) aufweist;
wobei der Schnittstellenbereich (21) des zumindest einen Kernschichtabschnitts (14) an einem Rand (20) des Kartenkörpers (10) angeordnet ist;
wobei der zumindest eine Kernschichtabschnitt (14) dazu ausgeführt ist, das Medium (15) aus der Umgebung (30) des Kartenkörpers (10) über den Schnittstellenbereich (21) aufzunehmen, um somit das Medium (15) in den zumindest einen Kernschichtabschnitt (14) einzulagern.

12. Kartenkörper (10) nach einem der vorhergehenden Ansprüche,
wobei der zumindest eine Kernschichtabschnitt (14) ein Latex-Material, ein Polyurethan-Material, ein Polyethylen-Material, ein Silikon-Material, ein Gummi-Material und/oder ein Verbundwerkstoff-Material umfasst.

13. Verwendung eines Kartenkörpers (10) nach einem der vorhergehenden Ansprüche als Teilkomponente eines kartenförmigen Datenträgers.

14. Verfahren zur Herstellung eines Kartenkörpers (10) für einen kartenförmigen Datenträger (1), umfassend:
Bereitstellen einer ersten Deckschicht (11) und einer zweiten Deckschicht (12, S1);
Bereitstellen einer Kernschicht (13) mit zumindest einem Kernschichtabschnitt (14), welcher zur Aufnahme eines Mediums (15) aus einer Umgebung (30) ausgebildet ist (S2);
Laminieren der ersten Deckschicht (11), der zweiten Deckschicht (12) und der Kernschicht (13), um somit einen Schichtverbund (40) zu bilden, in welchem die Kernschicht (13) zwischen der ersten Deckschicht (11) und der zweiten Deckschicht (12) angeordnet wird (S3);
Einbringen eines Mediums (15) in den zumindest einen Kernschichtabschnitt (14) vor oder nach dem Bilden des Schichtverbundes (40, S4), sodass das Medium (15) in den zumindest einen Kernschichtabschnitt (14) eingelagert wird.

15. Verfahren nach Anspruch 14, umfassend:
Aushärten des in den zumindest einen Kernschichtabschnitt (14) eingebrachten Mediums (15, S5).
